# EUROPEAN PATENT APPLICATION

(11) **EP 2 827 329 A2**
(43) Date of publication of application: **21.01.2015**
(21) Application number: 14164030.0
(22) Date of filing: 09.04.2014
(51) Int. Cl.: G10L 21/003, G10L 21/02, G10L 21/013

(54) **Call device and voice modification method**

(30) Priority: 13.06.2013 JP 2013124990
(71) Applicant: FUJITSU LIMITED, Kawasaki-shi, Kanagawa 211-8588 (JP)
(72) Inventor: Sasaki, Hayato, Kawasaki-shi, Kanagawa 211-8588 (JP)
(74) Representative: Ward, James Norman

(57) **Abstract**

A call device includes a processor configured to a specific language phonation of a user for the call device during a call, sample a frequency characteristic of a voice of an intended party, and modify the frequency characteristic of the voice of the intended party depending on detection of the phonation based on the frequency characteristic sampled from the voice of the intended party.

## Description

### FIELD

A certain aspect of the embodiments discussed herein relates to a call device and a voice modification method.

### BACKGROUND

During a call, it may not be possible to catch a word or words of an intended party. In regard to the main reason why it is not possible to catch the word or words, there is provided the possibility of a low voice of an intended party or a fast talking speed of an intended party. For example, a user increases the output sound volume of his/her own telephone set or requests the intended party to produce phonation in a loud voice or speak slower so as to address this case.

However, it may be difficult to catch the word or words of an intended party independently of a loud or low voice or a talking speed. That is, the sensitivity of a human ear changes depending on a pitch of sound. Therefore, even though volumes of voices are identical, there are voices easy to be caught and voices difficult to be caught, depending on the pitch of a voice. Then, there are personal differences as to what voices are difficult to be caught. For example, it is considered that it is difficult for an aged person to catch a high pitch sound.

Japanese Patent Application Publication No. 10-326176

### SUMMARY

Accordingly, it is an object of one aspect of the embodiment to support smoothing of a call.

According to an aspect of the embodiments, a call device includes a processor configured to detect a specific language phonation of a user for the call device during a call, sample a frequency characteristic of a voice of an intended party, and modify the frequency characteristic of the voice of the intended party depending on detection of the phonation based on the frequency characteristic sampled from the voice of the intended party.

### BRIEF DESCRIPTION OF THE DRAWING(S)

FIG. 1 is a diagram illustrating an example of a hardware configuration of a mobile phone device in an embodiment of the present embodiment;
FIG. 2 is a diagram illustrating an example of a functional configuration of a control part;
FIG. 3 is a flowchart illustrating one example of a procedure of a process to be executed by a control part of a mobile phone device;
FIG. 4 is a diagram illustrating voice data before phonation of a repeating word;
FIG. 5 is a diagram illustrating an example of a configuration of a correction data storage part; and
FIG. 6 is a diagram illustrating one example of a content of correction data.

### DESCRIPTION OF EMBODIMENT(S)

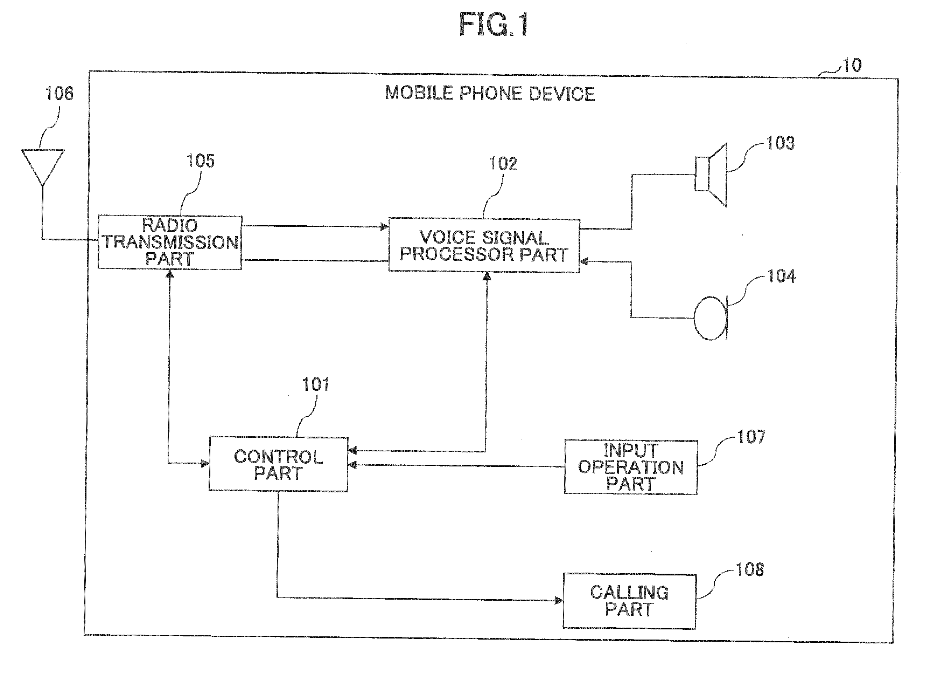

Embodiments of the present invention will be described with reference to the drawings below. FIG. 1 is a diagram illustrating an example of a hardware configuration of a mobile phone device in an embodiment of the present embodiment. In FIG. 1, a mobile phone device 10 includes a control part 101, a voice signal processor part 102, a speaker 103, a microphone 104, a radio transmission part 105, an antenna 106, an input operation part 107, a calling part 108, and the like.

The control part 101 includes, for example, a CPU, a ROM, a RAM, a flash memory, and the like. The RAM reads from the ROM, the flash memory, or the like and stores therein, a program in accordance with an instruction for starting the program. The CPU realizes a function relating to the mobile phone device 10 in accordance with the program stored in the RAM. For example, the control part 101 executes a process or control associated with a call in each part.

The voice signal processor part 102 includes a D/A converter, a digital signal processor (DSP), an A/D converter, a transmission signal amplifier, a receiving signal amplifier, and the like. In the present embodiment, the voice signal processor part 102 executes a process for correcting or modifying a frequency characteristic of a voice of an intended party. In the present embodiment, a frequency characteristic of a voice refers to a distribution of frequency components (a frequency spectrum) of a voice. For example, it is possible for a frequency characteristic of a voice to be represented by a graph wherein a transverse axis is a frequency and a longitudinal axis is an intensity of each frequency component.

The speaker 103 outputs the voice of an intended party. The microphone 104 converts the voice of a user for the mobile phone device 10 into an electric signal.

The radio transmission part 105 executes transmission or reception of a radio signal to or from a base station. The input operation part 107 includes a button, a touch panel, or the like, for accepting an operational instruction from a user. The calling part 108 includes an LED for notifying of an incoming call by flashing thereof, a ringer for notifying of it by a sound output therefrom, a vibrator for notifiying of it by vibration thereof, or the like.

For example, the speech of a user for the mobile phone device 10 (that will be referred to as a "subject user", below) in a call is input into the microphone 104 and converted into an electric signal. The electric signal is encoded by the voice signal processor part 102 and ultimately transmitted as a modulated signal from the radio transmission part 105 through the antenna 106 to a base station.

For the speech of an intended party (that will be referred to as "another user", below), the radio transmission part 105 receives a modulated signal from a base station through the antenna 106. The modulated signal is decoded by the voice signal processor part 102 and output as a voice from the speaker 103.

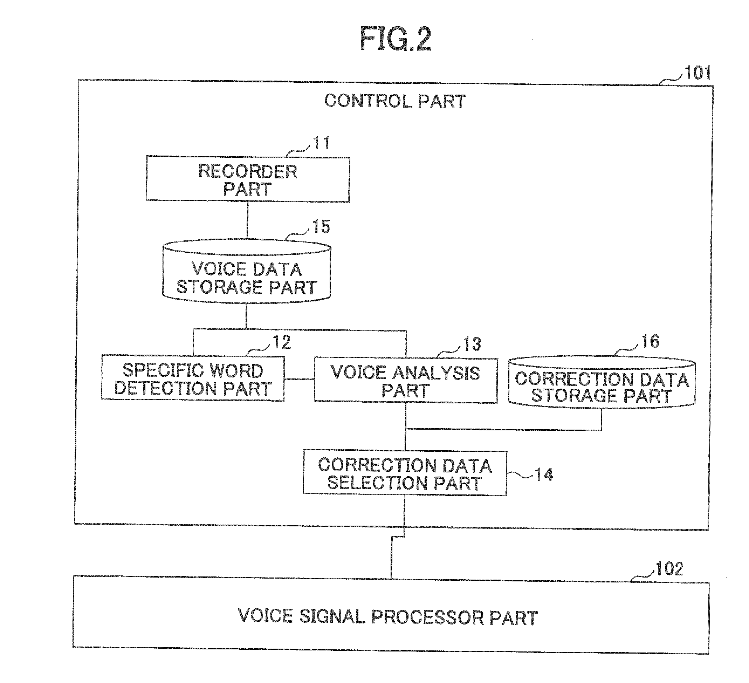

FIG. 2 is a diagram illustrating an example of a functional configuration of a control part. In FIG. 2, the control part 101 includes a recorder part 11, a specific word detection part 12, a voice analysis part 13, a correction data selection part 14, and the like. Each of these parts is realized by a process to be executed by a program in a CPU that constitutes the control part 101. The control part 101 further includes a voice data storage part 15, a correction data storage part 16, and the like. The voice data storage part 15 is capable of being realized by using a RAM ,a flash memory, or the like, that constitutes the control part 101. The correction data storage part 16 is capable of being realized by using a ROM, a flash memory, or the like, that constitutes the control part 101.

The recorder part 11 produces voice data wherein the speech content of each of a subject user and another user during a call is recorded. A format of the voice data is not limited to a particular one. The voice data storage part 15 stores voice data produced by the recorder part 11. Here, voice data to be stored are not necessarily the entire contents of a call from the start of a call but may be limited to a predetermined period of time before the present time.

The specific word detection part 12 monitors the speech of a subject user in voice data or the speech of a subject user being input from the microphone 104 and detects the speech of a specific word. In the present embodiment, a specific word refers to a word to be uttered for repeating the content of the speech of another user in a case where it was not possible to catch the content of a speech (that is referred to as a "repeating word", below). For one example of a word for listening gain, it is possible to provide "Eh?", "Yay-ess?", "What?", "I beg your pardon?", or the like. Detection of a repeating word may be executed by, for example, comparing character string data sampled in voice recognition with a listing of repeating words stored in the control part 101.

In a case where a repeating word is detected in a speech of a subject user by the specific word detection part 12, the voice analysis part 13, for example, executes spectral analysis on a voice from another user immediately before the repeating word and samples a frequency characteristic thereof.

The correction data selection part 14 selects correction data for correcting or modifying a voice of another user from a plurality of correction data stored in the correction data storage part 16 based on a frequency characteristic sampled by the voice analysis part 13. The correction data selection part 14 sets selected correction data in the voice signal processor part 102. The voice signal processor part 102 corrects or modifies a frequency characteristic of a voice of another user based on set correction data.

A procedure of a process to be executed by the mobile phone device 10 will be described below.

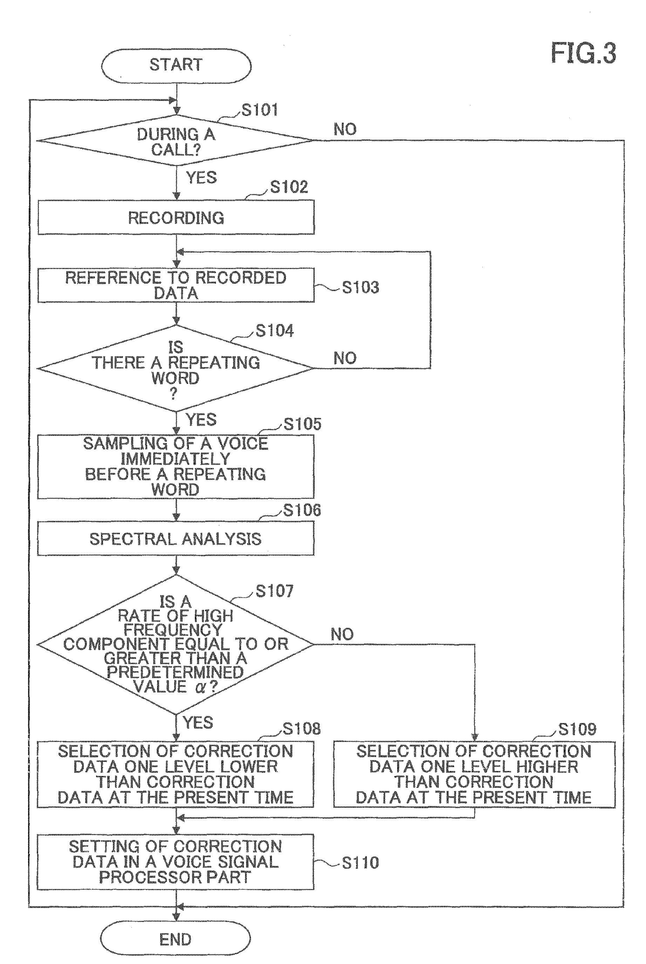

FIG. 3 is a flowchart for illustrating one example of a procedure of a process to be executed by a control part in a mobile phone device.

As an outgoing call or an incoming call is started, the recorder part 11 records the content of the call (S102) during the call ("YES" at S101). Specifically, the recorder part 11 produces voice data with the recorded content of the speech of each of a subject user and another user in a call, and stores the voice data in the voice data storage part 15.

The specific word detection part 12 refers to voice data sequentially during recording and determines the presence or absence of a repeating word in a speech of a subject user by using, for example, voice recognition or the like (S104). For example, the specific detection part periodically processes an object voice in voice data during the last second at one-second intervals. As the specific word detection part 12 detects a repeating word in a speech ("YES" at S104), voice data for a predetermined period of time before a start of the repeating word in the speech are sampled from the voice data storage part 15 (S105).

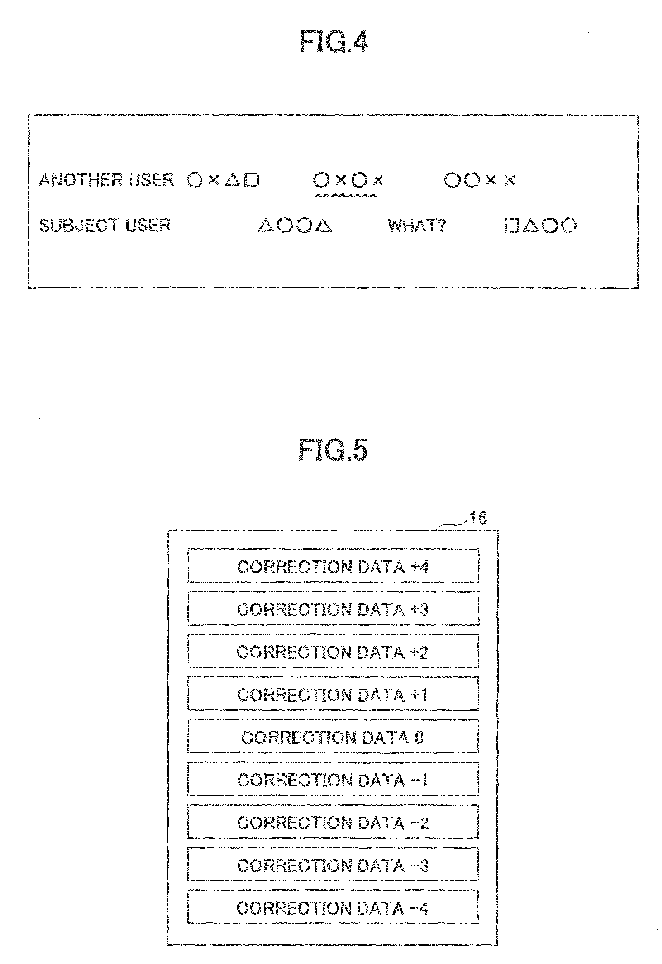

FIG. 4 is a diagram for illustrating voice data before a repeating word in a speech. In FIG. 4, a conversation between a subject user and another user is expressed by symbols. In FIG. 4, time proceeds from left to right. When another user says "OXOX", a subject user responds like "What?". At step S104, the repeating word in the speech is detected. At step S105, voice data are sampled in a period of time that includes "OXOX" in a speech of another user immediately before the repeating word.

Therefore, it is desirable for a predetermined period of time at step S105 to be a period of time with a high probability of including the content of a speech of another user. Alternatively, voice data may be sampled in a period of time that includes a last speech of another user before the repeating word in a speech. Here, voice data to be sampled may not be limited to those in a period of time immediately before a repeating word. For example, voice data relating to an entirety or a part that includes a speech of another person may be sampled from voice data stored in the voice data storage part 15 at the present time. However, recorded data immediately before a repeating word are sampled, so that it is possible to facilitate the specifying of a frequency characteristic of a voice that is hard to be heard by a subject user.

Subsequently, the voice analysis part 13 executes spectral analysis of sampled voice data (S106). As a result, a frequency characteristic of the voice data is sampled or produced.

Subsequently, the correction data selection part 14 determines whether or not a rate of a high frequency component in a sampled frequency characteristic is equal to or greater than a predetermined value α (S107). An essence of the determination corresponds to a determination as to whether or not a voice of another user is a high voice in a general sense. However, determination may not be made in a general sense but may be made based on a sense of a subject user. For example, it may be possible to modify the setting of the predetermined value α. Furthermore, a high frequency component refers to, for example, a component with a frequency equal to or higher than a certain threshold value but it may also be possible to modify the setting of the threshold.

In a case where a rate of a high frequency component is equal to or greater than a predetermined value α ("YES" at S107), the correction data selection part 14 selects correction data that are one level lower than correction data at the present time (S108). Correction data at the present time refers to correction data that are applied to the voice signal processor part 102 at the present time.

FIG. 5 is a diagram illustrating an example of a configuration of a correction data storage part 16. In FIG. 5, the correction data storage part 16 includes correction data 0, correction data +1 to +4, correction data -1 to -4, and the like. Respective correction data are data that include information for indicating a difference between frequency characteristics before and after a correction or before and after a modification, wherein a numerical value at an end of a name of correction data is different depending on information of such a difference. That is, correction data 0 are correction data for executing no correction. For example, correction data 0 may be set in the voice signal processor part 102 for an initial setting at a time of shipment, a time of an initial call, or the like, of the mobile phone device 10.

Correction data +1 to +4 are correction data for increasing a high frequency component (making a voice of another user higher), wherein when a plus value of an end thereof is large, an amount of an increase of a high frequency component is increased. Correction data +1 to +4 will be referred to as "plus correction data" below. Here, plus correction data may be to decrease a low frequency component. On the other hand, correction data -1 to -4 are correction data for increasing a low frequency component (making a voice of another user lower), wherein when a minus value at an end thereof is large, an amount of an increase of a low frequency component is increased. Correction data -1 to -4 will be referred to as "minus correction data" below. Here, minus correction data may be to decrease a high frequency component.

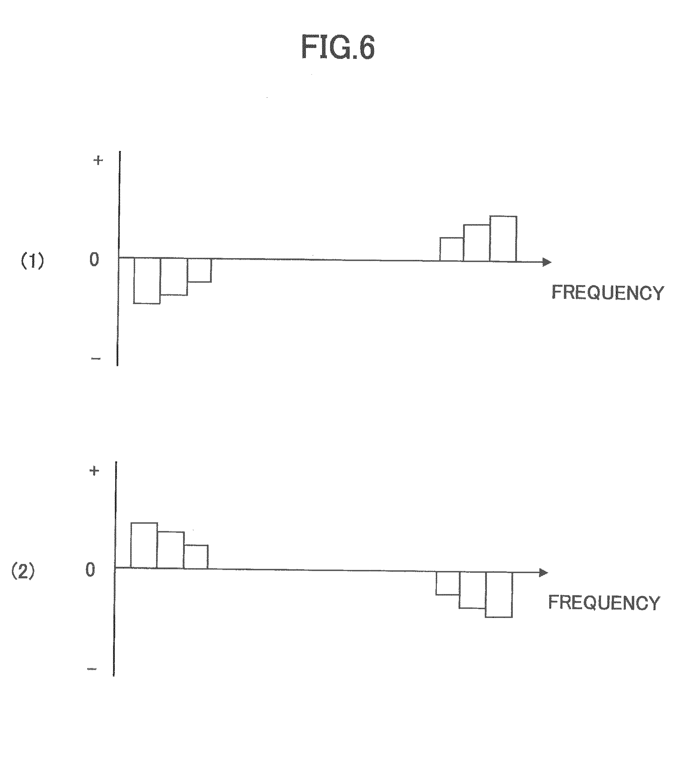

FIG. 6 is a diagram illustrating one example of a content of correction data. In FIG. 6, a transverse axis is a frequency, while a + direction of a longitudinal axis is an increase of an intensity at a frequency and a - direction of the longitudinal axis is a decrease of an intensity at a frequency. In FIG. 6, (1) is an example of plus correction data. That is, (1) is correction data for increasing a high frequency component and decreasing a low frequency component. A tendency thereof increases in order of correction data +1, +2, +3, and +4. On the other hand, (2) is an example of minus correction data. That is, (2) is correction data for increasing a low frequency component and decreasing a high frequency component. A tendency thereof increases in order of correction data -1, -2, -3, and -4.

Here, correction data 0 are ±0 over an entire frequency.

At step S108, correction data that are one level lower than correction data at the present time refer to correction data wherein a value at an end of the correction data is smaller than that at the present time. Therefore, for example, in a case where correction data at the present time are correction data 0, correction data -1 are selected. In a case where correction data at the present time are correction data +2, correction data +1 are selected. In a case where correction data at the present time are correction data -2, correction data -3 are selected.

On the other hand, in a case where a rate of a high frequency component is less than a predetermined value α ("NO" at S107), the correction data selection part 14 selects correction data that are one level higher than correction data at the present time (S109). Correction data that are one level higher than correction data at the present time refer to correction data wherein a value at an end of the correction data is one larger than that at the present time. Therefore, for example, in a case where correction data at the present time are correction data 0, correction data +1 are selected. In a case where correction data at the present time are correction data +2, correction data +3 are selected. In a case where correction data at the present time are correction data -2, correction data -1 are selected.

The correction data selection part 14 stores in the RAM, for example, information for indicating what is selected correction data.

Here, it is considered that a plurality of correction patterns or modification patterns for a frequency characteristic of a voice are stored in the correction data storage part 16. It is considered that steps S108 and S109 are processes for selecting one correction pattern or modification pattern from a plurality of correction patterns or modification patterns.

Subsequently, the correction data selection part 14 sets selected correction data in the voice signal processor part 102 (S110). The voice signal processor part 102 corrects or modifies a frequency characteristic of a subsequent voice of another user based on a correction pattern or modification pattern that is indicated by set correction data. For example, in a case where correction data as illustrated in (1) of FIG. 6 are set, the voice signal processor part 102 increases a frequency component in a high frequency domain and decreases a frequency component in a low frequency domain, for a voice of another user. On the other hand, in a case where correction data as illustrated in (2) of FIG. 6 are set, the voice signal processor part 102 decreases a frequency component in a high frequency domain and increases a frequency component in a low frequency domain, for a voice of another user.

As a result, for example, in a case where a voice of another user is so high that it is difficult to be heard, the voice of another user is made lower. Furthermore, in a case where a voice of another user is so low that it is difficult to be heard, the voice of another user is made higher. Here, the process in FIG. 3 is repeated during a call. Therefore, as a subject user again pronounces a repeating word, selection of correction data is executed again. Accordingly, it is expected that listening of a subject user to a voice of another user is facilitated gradually.

The correction data selection part 14 may relate to an incoming call number or an outgoing call number and store in a flash memory, correction data selected at an end of the call. In a case where the mobile phone device 10 provides an outgoing call or an incoming call and a case where there are correction data relating to an outgoing call number or an incoming call number, the correction data selection part 14 may set the correction data in the voice signal processor part 102 at, for example, a time of the start of a call. Accordingly, it is possible to increase a probability of being able to output a voice corrected or modified to have a frequency characteristic that is readily be heard by a subject user from a time of the start of a call.

Here, at steps S108 and S109, in a case where correction data at the present time are correction data -4 or correction data +4 and there is not correction data that are one level lower than it or correction data that are one level higher than it, correction data 0 may be selected. Subsequently, in a case where correction data are modified, a determination at step S107 may be ignored and correction data with a tendency different from a tendency of an original correction may be selected. For example, after correction data are originally changed to have a plus tendency and reaches correction data +4, the correction data may be modified to have a minus tendency.

As described above, according to the present embodiment, a frequency characteristic of a voice of another user is automatically modified depending on a repeating word in a speech. Therefore, it is possible to increase a probability of correcting or modifying a voice quality of another user to a voice quality that is readily heard by a subject user, while the subject user does not conduct a special operation. As a result, it is possible to prevent a repeating word from being uttered frequently and it is possible to expect smoothing of a call.

Here, although an example in the present embodiment is provided in such a manner that correction data are relative values, that is, information for indicating a difference to be applied by correction, correction data may be absolute values. For example, correction data for indicating frequency characteristics with N patterns from a low voice to a high voice are prepared, and when correction to a high voice is desired, correction data are selected that correspond to one level higher voice. A difference between the correction data and a frequency component sampled at step S106 may be calculated and the difference may be set in the voice signal processor part 102. Correction or modification of a frequency characteristic may be executed by another method.

Furthermore, the present embodiment may be applied to a call device other than the mobile phone device 10, such as a land line phone or a transceiver.

Here, the mobile phone device 10 in the present embodiment is one example of a call device. The specific word detection part 12 is one example of a detection part. The voice analysis part 13 is one example of a sampling part. The voice signal processor part 102 is one example of a modification part. The correction data selection part 14 is one example of a selection part.

According to one aspect of the embodiment, it is possible to support smoothing of a call.

## Claims

1. A call device (10), comprising:
a detection part (12) configured to detect a specific language phonation of a user for the call device during a call;
a sampling part (13) configured to sample a frequency characteristic of a voice of an intended party; and
a modification part (102) configured to modify the frequency characteristic of the voice of the intended party depending on detection of the phonation based on the frequency characteristic sampled from the voice of the intended party.

2. The call device as claimed in claim 1, wherein the modification part is configured to modify the frequency characteristic of the voice of the intended party based on the frequency characteristic sampled from the voice of the intended party immediately before the specific language phonation.

3. The call device as claimed in claim 1 or 2, further comprising:
a selection part (14) configured to select one modification pattern among a plurality of modification patterns of the frequency characteristic of the intended party based on the frequency characteristic sampled from the voice of the intended party immediately before the specific language phonation,
wherein the modification part is configured to modify the frequency characteristic of the voice of the intended party based on the modification pattern selected by the selection part.

4. The call device as claimed in claim 3, further comprising:
a storage part configured to relate to a telephone number of the intended party, and store therein, a selection pattern selected by the selection part,
wherein the modification part is configured to modify the frequency characteristic of the voice of the intended party based on the modification pattern stored to be related to the telephone number in an outgoing call or an incoming call relating to the telephone number stored in the storage part.

5. A voice modification method, comprising:
detecting a specific language phonation of a user for a call device during a call;
sampling a frequency characteristic of a voice of an intended party; and
modifying the frequency characteristic of the voice of the intended party depending on detection of the phonation and based on the frequency characteristic sampled from the voice of the intended party.

6. The voice modification method as claimed in claim 5, wherein the frequency characteristic of the voice of the intended party is modified based on the frequency characteristic sampled from the voice of the intended party immediately before the specific language phonation.

7. The voice modification method as claimed in claim 5 or 6, further comprising:
selecting one modification pattern among a plurality of modification patterns of the frequency characteristic of the intended party based on the frequency characteristic sampled from the voice of the intended party immediately before the specific language phonation,
wherein the frequency characteristic of the voice of the intended party is modified based on the selected modification pattern.

8. The voice modification method as claimed in claim 7, further comprising:
relating to a telephone number of the intended party and storing in a memory, the selected modification pattern,
wherein a frequency characteristic of a voice of the intended party is modified based on the stored modification pattern related to the telephone number in an outgoing call or an incoming call relating to the stored telephone number.

9. A voice modification program configured to cause a computer to execute a process comprising:
detecting a specific language phonation of a user for the call device during a call;
sampling a frequency characteristic of a voice of an intended party; and
modifying the frequency characteristic of the voice of the intended party depending on detection of the phonation and based on a frequency characteristic sampled from the voice of the intended party.

10. The voice modification program as claimed in claim 9, wherein the frequency characteristic of the voice of the intended party is modified based on the frequency characteristic sampled from the voice of the intended party immediately before the specific language phonation.

11. The voice modification program as claimed in claim 9 or 10, wherein the process further comprises:
selecting one modification pattern among a plurality of modification patterns of the frequency characteristic of the intended party based on the frequency characteristic sampled from the voice of the intended party immediately before the specific language phonation,
wherein the frequency characteristic of the voice of the intended party is modified based on the selected modification pattern.

12. The voice modification program as claimed in claim 11, wherein the process further comprises:
relating to a telephone number of the intended party and storing in a memory, the selected modification pattern,
wherein the frequency characteristic of the voice of the intended party is modified based on the stored modification pattern related to the telephone number in an outgoing call or an incoming call relating to the stored telephone number.
